# EUROPÄISCHE PATENTSCHRIFT

(11) **EP 1 951 505 B1**
(45) Veröffentlichungstag und Bekanntmachung des Hinweises auf die Patenterteilung: **19.01.2011**
(21) Anmeldenummer: 06828551.9
(22) Anmeldetag: 21.11.2006
(51) Int. Cl.: B29C 67/00, B29C 41/12

(54) **VERFAHREN UND VORRICHTUNG ZUM FLÄCHIGEN AUFTRAGEN VON FLIESSFÄHIGEM MATERIAL**
METHOD AND DEVICE FOR APPLYING A FLOWABLE MATERIAL ACROSS A SURFACE
PROCEDE ET DISPOSITIF PERMETTANT D'APPLIQUER EN NAPPE UNE MATIERE APTE A S'ECOULER

(30) Priorität: 25.11.2005 DE 102005056260
(43) Veröffentlichungstag der Anmeldung: 06.08.2008
(73) Patentinhaber: ProMetal RCT GmbH, 86167 Augsburg (DE)
(72) Erfinder: HÖCHSMANN, Rainer, 86682 Genderkingen (DE); STACHULLA, Martin, 86157 Augsburg (DE); KRABLER, Bernd, 86672 Thierhaupten (DE); HÜHN, Stefan, 86169 Augsburg (DE); MÜLLER, Alexander, 86343 Königsbrunn (DE); SONNTAG, Frank, 86438 Kissing (DE)
(74) Vertreter: Viering, Jentschura & Partner
(86) Internationale Anmeldenummer: PCT/DE2006/002047
(87) Internationale Veröffentlichungsnummer: WO 2007/059743

(56) Entgegenhaltungen:
- WO-A-95/34468
- WO-A-2004/054743

## Beschreibung

Die Erfindung betrifft Verfahren und Vorrichtung zum flächigen Auftragen von fließfähigem Material, insbesondere Partikelmaterial, in einzelnen übereinanderliegenden Schichten auf eine Unterlage.

Üblicherweise werden derartige Verfahren und Vorrichtungen verwendet, um schichtweise dreidimensionale Objekte zu erstellen. Hierbei wird ein dreidimensionales Objekt durch selektives Verfestigen von aufeinanderfolgenden Schichten eines pulverförmigen Materials an den entsprechenden Stellen eines jeweiligen Querschnitts des Objekts zum Beispiel durch selektives Auftragen eines Bindemittels auf die jeweilige Schicht und das Verfestigen des Bindemittels, durch Einbringen eines Bindemittels in die jeweilige Schicht und selektives Verfestigen des Bindemittels, oder durch selektive Einwirkung eines Laserstrahls auf die jeweilige Schicht hergestellt.

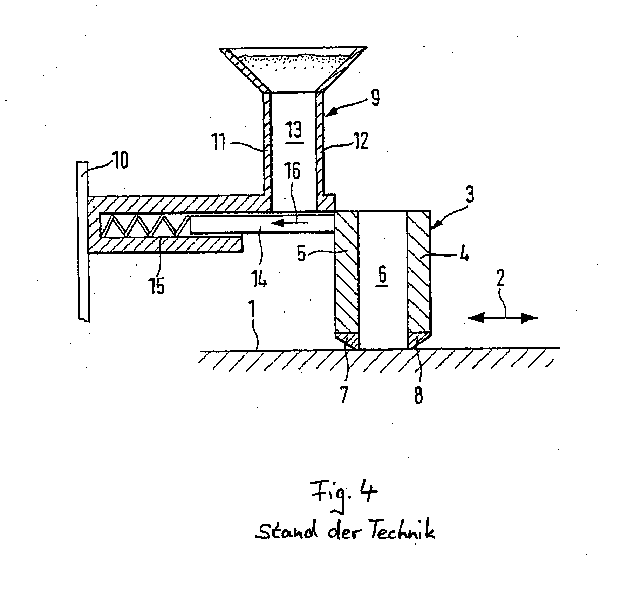

Aus der WO 00/78485 A2 ist eine Beschichtungseinrichtung zum flächigen Auftragen von fließfähigem Material in einzelnen Schichten übereinander auf eine Unterlage bekannt. Wie aus Figur 4 ersichtlich, weist die Beschichtungseinrichtung 3 einen Dosierschacht, der über die Unterlage hinweg hin und her verfahrbar ist, mit zwei in einem Abstand voneinander befindlichen Wänden 4, 5 auf, welche sich über die gesamte Breite der Unterlage hin, auf welche die Schichten aufgetragen werden, erstrecken und zwischen einander einen oben und unten offenen Schacht 6 bilden. An ihrem der Fläche 1 benachbarten unteren Ende weisen die Wände 4, 5 Glättelemente 7,8 auf, die beispielsweise als Gummilippen oder als Metallklingen ausgebildet sein können. Alternativ sind die Glättelemente aus Keramik gebildet. Die Beschichtungseinrichtung 3 wird an ihren beiden einander gegenüberliegenden Enden oder an einem Ende in dem Rahmen der Einrichtung so geführt und angetrieben, dass ein Hin- und Herbewegen des Dosierschachts über die gesamte Fläche 1 hinweg, und dadurch ein Auftragen der jeweiligen Schicht in vorbestimmter Schichtdicke auf die Unterlage möglich ist. Es ist ein ortsfester Vorratsbehälter 9 vorgesehen, der von dem Maschinenrahmen 10 getragen wird und der ebenfalls einen nach oben und unten offenen Schacht 13 bildet.

Aus der WO 2004/054743 sind die Merkmale der Oberbegriffe der Ansprüche 1 und 2 bekannt.

Im Betrieb wird Pulver aus dem ortsfesten Vorratsbehälter in einer Endstellung der Beschichtungseinrichtung 3 in deren Schacht 6 gefüllt. Bei dem anschließenden Wegbewegen der Beschichtungseinrichtung 3 erfolgt eine Selbstnivellierung des fließfähigen Pulvers im Vorratsbehälter im Rahmen des sich aufbauenden Schüttkegels. Ist der Vorratsbehälter sehr breit und dazu relativ schmal in der Tiefe, kann es sein, dass das Pulver mittels Vibratoren oder Verteilschnecke im Vorratsbehälter verteilt werden muss. Dies ist insbesondere dann der Fall, wenn schlecht fließfähiges Pulver verwendet wird, der Schüttkegel damit sehr steil ist.

Das Pulver im Vorratsbehälter erfährt aufgrund der mechanischen Verteilung mittels Verteilschnecke oder Vibratoren deutlich unterschiedliche Verdichtungen längs des Vorratsbehälters. Dies hat zur Folge, dass örtlich unterschiedliche Dosiermengen in den hin und her verfahrbaren Vorratsbehälter der Beschichtungseinrichtung, in dessen Endstellung dosiert werden, was letztlich zu örtlich unterschiedlichen Verdichtungen im Baufeld und somit zu Qualitätsschwankungen hinsichtlich Festigkeit, Oberflächengüte und Bauteileverdichtung führen kann. Um Inhomogenitäten beim Nachfüllen des Vorratsbehälters aufgrund von Resten zu vermeiden, die im Vergleich mit dem neu eingefüllten Pulver eine andere Dichte aufweisen, wird üblicherweise der Vorratsbehälters vollständig entleert bzw. genullt. Dadurch werden allerdings weitere Abfallmengen erzeugt.

Aufgabe der Erfindung ist es, ein Verfahren und eine Vorrichtung zu schaffen, mit denen eine weitgehend homogene Beschichtung der Unterlage über deren Fläche hin realisierbar ist. Diese Aufgabe wird mit dem Verfahren und der Vorrichtung mit den Merkmalen in Anspruch 1 bzw. Anspruch 4 gelöst. Bevorzugte Ausführungsformen der Erfindung sind in den jeweiligen abhängigen Ansprüchen beschrieben.

Gemäß der Erfindung wird der Dosierschacht einer hin- und herverfahrbaren Auftragevorrichtung, aus dem das fließfähige Material auf die Unterlage bzw. auf die vorhergehend auf die Unterlage aufgetragene Schicht fließt, zu jedem Zeitpunkt während der Beschichtungsfahrt kontinuierlich mit fließfähigem Material aus einem integrierten Vorlagebehälter so befüllt, dass der Füllstand in dem Dosierschacht während der Beschichtungsfahrt auf einem vorbestimmten Niveau bleibt. Der in die verfahrbare Auftragevorrichtung integrierte Vorlagebehälter kann auf einfache Weise aus einem stationären Materialvorrat nachgefüllt werden.

Ein weiterer Vorteil der Erfindung ist, dass die einfache Nachbefüllung des Vorlagebehälters zum Beispiel direkt aus einer Förderschnecke bewerkstelligt werden kann, weil es wegen der Zwischenschaltung des Vorlagebehälters zwischen die stationäre Vorratsstation und dem Dosierschacht nicht erforderlich ist, die Verteilung des Materials in dem Dosierschacht bereits während der Übergabe des Materials aus der Vorratsstation herbeizuführen. Vielmehr kann gemäß der Erfindung das Material aus der Vorratsstation in einen örtlich begrenzten Bereich des Vorlagebehälters übergeben werden, in welchem das Material dann mittels einer geeigneten Verteileinrichtung wie einer Förderschnecke, die in dem Vorlagebehälter selbst vorgesehen ist, vorverteilt werden kann.

Ein weiterer Vorteil ist, dass weniger Pulvermengen aufgrund der verringerten Behältervolumina vorgehalten werden müssen. Somit können Abfallmengen für insbesondere in der Lebensdauer begrenzte Pulverarten reduziert werden. Bei einem Wechsel der Pulverarten entstehen gleichfalls weniger Abfallmengen.

Da durch eine gleichmäßige Verteilung des Pulvermaterials in dem Dosierschacht keine unterschiedlichen Verdichtungen längs des Dosierschachtes auftreten, muss darüber hinaus der Dosierschacht aufgrund der Erfindung nicht mehr vor einem Nachfüllen von Pulver vollständig entleert werden, wodurch zusätzliche Abfallmengen vermieden werden können.

Im Folgenden wird die Erfindung anhand bevorzugter Ausführungsformen unter Bezugnahme auf die Zeichnungen beschrieben. In der Zeichnung zeigen:
Figur 1 eine schematische Darstellung einer bevorzugten Ausführungsform einer Auftragevorrichtung gemäß der Erfindung zusammen mit einem stationären Material-Vorratsbehälter und einer Fläche, auf die das Material in gleichmäßiger Schicht aufgetragen werden soll.
Figur 2 eine schematische Darstellung der Elemente aus Figur 1 von der Seite.
Figur 3a eine vergrößerte Ansicht des Details A der bevorzugten Ausführungsform aus Figur 1.
Figur 3b eine vergrößerte Ansicht des Details A aus Figur 1, allerdings gemäß einer anderen Ausführungsform der Erfindung.
Figur 3c eine vergrößerte Ansicht des Details A aus Figur 1, allerdings gemäß einer weiteren Ausführungsform der Erfindung.
Figur 3d eine vergrößerte Ansicht des Details A aus Figur 1, allerdings gemäß noch einer weiteren Ausführungsform der Erfindung.
Figur 4 eine konventionelle Auftragevorrichtung zusammen mit einem stationären Materialvorrats-Behälter und einer Fläche, auf die Material aufgetragen werden soll.

Gemäß der Erfindung wird zum flächigen Auftragen von fließfähigem Material, insbesondere von Partikel-oder Pulvermaterial, in einzelnen übereinanderliegenden Schichten auf eine Unterlage 50 das fließfähige Material aus einem stationären Materialvorrat 10 in eine verfahrbare Auftragevorrichtung 20 eingefüllt, die über die Unterlage 50 hinweg hin und her bewegbar ist und aus welcher das eingefüllte Material nach unten in kontinuierlichen Schichten ausgetragen und gleichmäßig verteilt wird. Hierbei wird in der Auftragevorrichtung 2 ein Vorlagevorrat angelegt, aus welchem ein Dosierschacht derart befüllt wird, dass die Füllhöhe des fließfähigen Materials in dem Dosierschacht während der Bewegung der Auftragevorrichtung konstant bleibt.

Um beispielsweise bei Rapid-Prototyping-Anwendungen gleichmäßige Schichten übereinander aufzutragen, in denen dann jeweils Querschnitte des zu produzierenden dreidimensionalen Gegenstandes selektiv gebunden oder ausgehärtet werden, werden bei dem Verfahren gemäß der Erfindung die Bedingungen beim Schichtauftragen konstant gehalten. Diese Bedingungen werden insbesondere durch die Füllhöhe und die Art des Materials vorgegeben, die in dem Dosierschacht bereitgestellt werden. Durch eine gleichmäßige und konstante Verteilung des fließfähigen Materials in dem Dosierschacht kann erreicht werden, dass das fließfähige Material an der Ausgabeöffnung des Dosierschachts immer mit gleichmäßigem Druck und in gleichmäßiger Menge als Schicht auf eine Unterlage aufgetragen werden kann. Um diese Bedingungen zu erreichen, weist die Auftragevorrichtung 20 gemäß der Erfindung einen Vorlagebehälter 24, einen Dosierschacht 30 und vorzugsweise eine Vibrationsvorrichtung 40 auf.

Der Vorlagebehälter 24 ist in der bevorzugten Ausführungsform ein oben offener, länglicher Behälter mit rechteckigem Querschnitt. Am unteren Rand der bei der Beschichtungsfahrt vor- oder nachlaufenden Längswand des Vorlagebehälters 24 ist ein Ausgabeschlitz 26 über die gesamte Länge hin ausgebildet. Vorzugsweise ist die Bodenwand 25 des rechteckigen Behälters zum Schlitz 26 hin schräg abfallend ausgebildet. Auf diese Weise bildet der Raum, in dem das fließfähige Material aufgenommen werden kann, einen trichterförmigen Querschnitt. Dieser Querschnitt ist über die gesamte Länge des Vorlagebehälters hin vorzugsweise gleich, wodurch die Nutzung des eingefüllten Materials besser gewährleistet werden kann.

Der Vorlagebehälter 24 ist oberhalb eines Dosierschachts 30 angeordnet und der Schlitz 26 ist so angeordnet, dass durch diesen das fließfähige Material in den Dosierschacht 30 fließen kann. Der Dosierschacht 30 weist ebenfalls vorzugsweise einen oben offenen, trichterförmigen Querschnitt auf, wobei am unteren Ende des Dosierschachts ein Ausgabeschlitz ausgebildet ist, durch den das fließfähige Material auf eine Unterlage 50 fließen kann, auf die eine Materialschicht aufgetragen werden soll.

Sowohl der Vorlagebehälter 24 als auch der Dosierschacht 30 sind zumindest so lang, dass sie die vollständige Breite der Unterlage 50 überspannen.

In der bevorzugten Ausführungsform ist weiterhin seitlich des Dosierschachts 30 und unterhalb des Vorlagebehälters 24 eine Vibrationsvorrichtung 40 vorgesehen. Die Vibrationsvorrichtung 40 kann beispielsweise ein Schwingbalken sein. Indem sowohl der Dosierschacht 30 als auch der Vorlagebehälter 24 in Schwingungen versetzt werden, kann gewährleistet werden, dass das fließfähige Material sich gleichmäßig in dem Dosierschacht 30 bzw. dem Vorlagebehälter 24 verteilt und gleichmäßig aus diesem herausfließen kann.

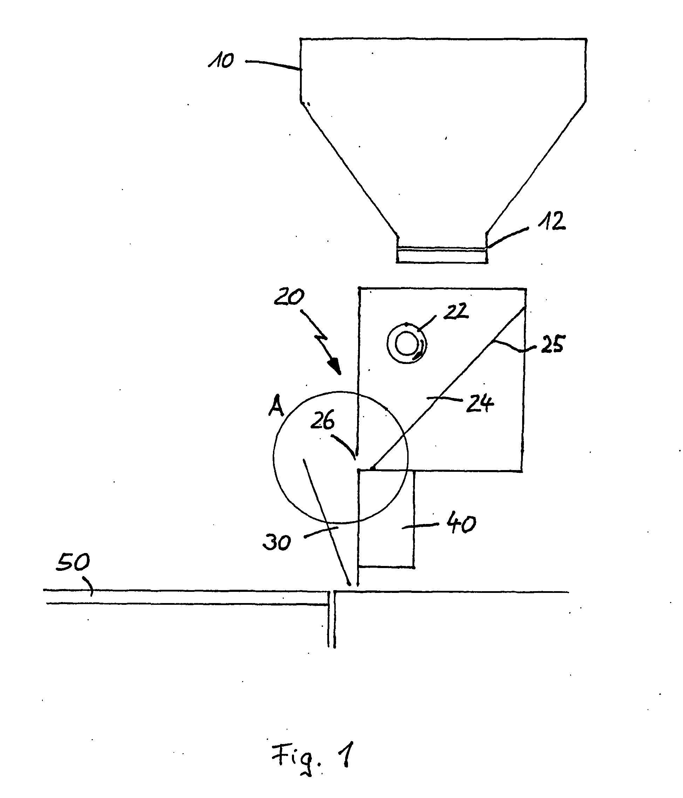

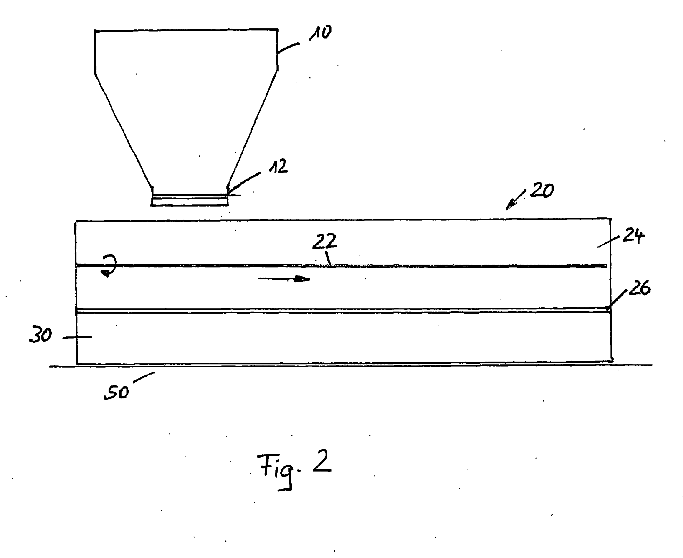

In einer Endstellung der Auftragevorrichtung, über einem Ende der Unterlage 50 kann eine Möglichkeit vorgesehen sein, den Vorlagebehälter 24 mit fließfähigem Material zu befüllen. Hierzu kann, wie in den Figuren 1 und 2 abgebildet, ein stationärer Materialvorrats-Behälter 10 vorgesehen sein, in dem eine Menge an fließfähigem Material vorgesehen wird, die ausreichend ist, um zumindest die zur Herstellung eines bestimmten Gegenstandes notwendigen Schichten auf die Unterlage auftragen zu können. Die Position dieses stationären Materialvorrats-Behälters 10 relativ zur Längsausdehnung des Vorlagebehälters 24 kann frei gewählt werden. Gemäß der bevorzugten Ausführungsform ist diese Position in der Nähe des einen seitlichen Endes des Vorlagebehälters 24, wie in Figur 2 dargestellt. Die Abgabe des fließfähigen Materials aus dem Materialvorrats-Behälter 10 heraus kann beispielsweise über ein Ventil 12 gesteuert werden. Sobald fließfähiges Material von dem stationären Materialvorrats-Behälter 10 in den Vorlagebehälter 24 eingefüllt ist, kann in der bevorzugten Ausführungsform eine Verteilvorrichtung 22, wie etwa eine Schnecke, in dem Vorlagebehälter 24 eine Verteilung des fließfähigen Materiales über die komplette Länge des Vorlagebehälters 24 hin bewerkstelligen.

Alternativ kann statt des stationären Materialvorrats-Behälters 10 auch ein Förderband'oder reine Zuführschnecke für die Zuführung von fließfähigem Material vorgesehen sein.

Allerdings ist es auch möglich, das fließfähige Material bereits bei der Übergabe aus dem Vorratsbehälter 10 in dem Vorlagebehälter 24 über dessen Länge hin zu verteilen. Dann kann eine Verteilvorrichtung in dem Vorlagebehälter selbst entfallen. Je nach Länge/Breite der Unterlage und daher des Vorlagebehälters und dessen Höhe kann es auch bereits ausreichen, das Material an örtlich begrenzter Stelle in dem Vorlagebehälter als Schüttkegel aufzubauen, dessen Material dann beispielsweise durch Vibration über den Vorlagebehälter hin verteilt wird, so dass der Ausgabeschlitz 26 stets mit Material gefüllt bleibt. Die Menge an fließfähigem Material, die von dem Materialvorrats-Behälter 10 in den Vorlagebehälter 24 eingefüllt wird, sollte zumindest so groß sein, dass bei Einhaltung einer konstanten Füllhöhe im Dosierschacht 30 zumindest eine Schicht während einer Hin-und-her-Bewegung der Auftragevorrichtung 20 auf die Fläche 50 aufgetragen werden kann.

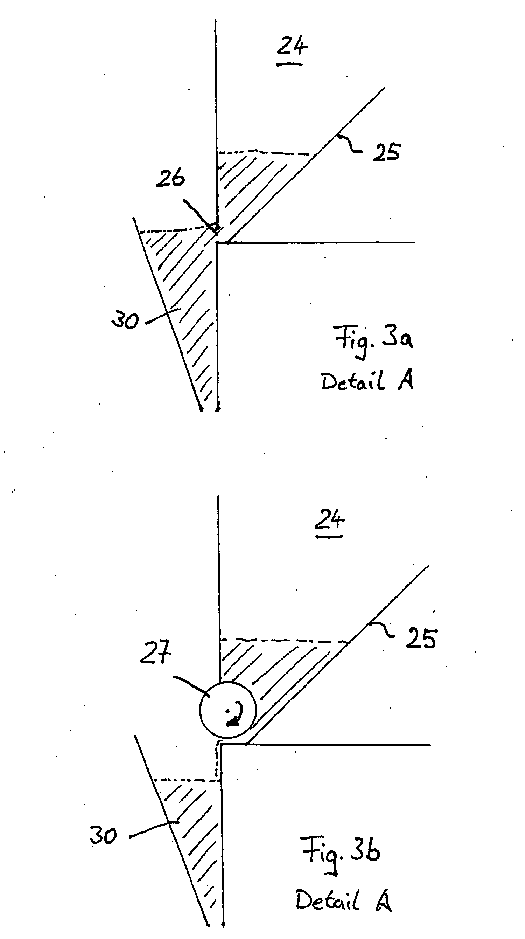

Ein besonderer Aspekt der Erfindung ist die Möglichkeit, die Füllhöhe des Dosierschachts, aus dem das Material auf die Fläche fließt, während des Auftragens konstant oder zumindest nahezu konstant zu halten, damit die Schicht im wesentlichen frei von örtlichen Dichtunterschieden gleichmäßig wird. Die in den Figuren 3a bis 3d dargestellten Ausführungsformen der Auftragevorrichtung, insbesondere hinsichtlich der Gestaltung des Ausgabechlitzes 26, durch den das fließfähige Material aus dem Vorlagebehälter 24 in den Dosierschacht 30 fließt, stellen Beispiele für Strukturen dar, mit Hilfe derer eine konstante Füllhöhe in dem Dosierschacht 30 erzielt werden kann.

Figur 3a zeigt eine einfache, sich selbst regulierende Ausführungsform. Das fließfähige Material in der Auftragevorrichtung 20 wird sich aufgrund der Vibrationen der Vibrationsvorrichtung 40 innerhalb des Vorlagebehälters und des Dosierschachts gleichmäßig verteilen. Indem die Weite des Schlitzes 26 so gewählt wird, dass mindestens soviel Material aus dem Vorlagebehälter 24 durch den Schlitz 26 in den Dosierschacht 30 wie aus dem Dosierschacht 30 heraus auf die Fläche 50 fließt, wird in dem Dosierschacht eine Füllhöhe erreicht, die etwa bis zu der oberen Begrenzungskante des Schlitzes 26 reicht. Damit blockiert das Material in dem Dosierschacht 30 den Schlitz 26 und damit das Nachströmen von Material aus dem Vorlagebehälter 24. Sobald aber Material aus dem Dosierschacht nach unten auf die Fläche 50 abfließt, kann Material aus dem Vorlagebehälter 24 in den Dosierschacht 30 nachfließen. Auf diese Weise wird immer nur gerade so viel Material in den Dosierschacht hineinfließen, wie auch aus ihm heraus fließt.

Figur 3b zeigt eine Ausführungsform, bei der über die gesamte Länge des Schlitzes 26 hin insbesondere eine angetrieben drehbare Walze 27 eingebaut ist. Der Spalt zwischen dem Boden des Vorlagebehälters 24 und der Walze 27 ist kleiner als der Schlitz, aus dem Material aus dem Dosierschacht 30 auf die Fläche 50 abfließen kann. Damit würde die Füllhöhe bei einem Auftragen einer Materialschicht auf die Fläche 50 absinken. Durch ein Antreiben der Walze 27 in Richtung des eingezeichneten Pfeils (siehe Figur 3b) kann erreicht werden, dass die Flussmenge zwischen dem Boden des Vorlagebehälters und der Walze 27 insbesondere in Abhängigkeit von der Fahrgeschwindigkeit der Auftragevorrichtung geregelt wird. Auf diese Weise kann die Menge, die aus dem Dosierschacht herausfließt, auf die Menge des Materials, die an der Walze 27 vorbei in den Dosierschacht hineinfließt, abgestimmt werden und auf diese Weise die Füllhöhe in dem Dosierschacht konstant gehalten werden.

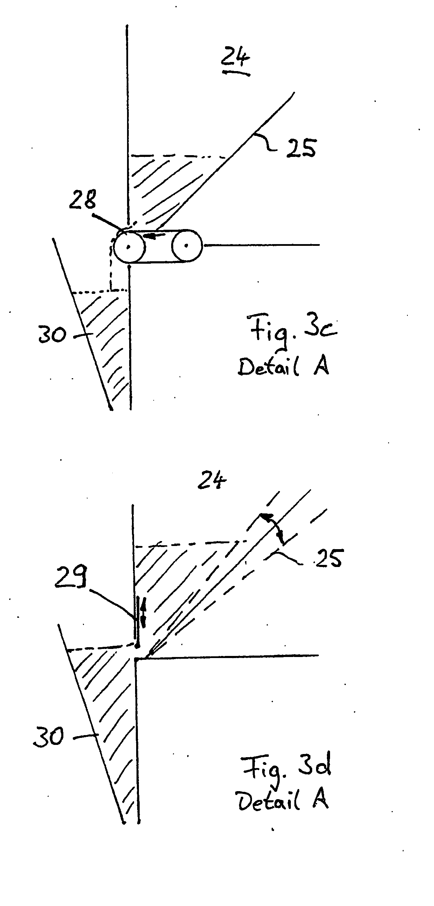

In Figur 3c ist eine weitere Ausführungsform im Bereich des Schlitzes 26 illustriert. Diese Ausführungsform ist vergleichbar mit der aus Figur 3b, mit dem Unterschied, dass hier die Menge an Material, die aus dem Vorlagebehälter 24 in den Dosierschacht 30 fließt, mittels eines angetriebenen Bandes 28 geregelt wird, das sich über die gesamte Länge des Schlitzes 26 hin am Boden des Vorlagebehälters 24 erstreckt und das fließfähige Material zum Abfließen durch den Schlitz 26 hindurch antreibt. Auch hier ist der Schlitz 26 kleiner als die Öffnung, aus der das Material aus dem Dosierschacht 30 herausfließt. Auf diese Weise kann die durch den Schlitz 26 hindurchgehende Durchflussmenge so geregelt werden, dass die Füllhöhe in dem Dosierschacht 30 konstant bleibt. Weiterhin kann bei dieser Ausführungsform auf den schräg liegenden Boden 25 verzichtet werden, wenn das Band 28 in diesem Fall die ganze Breite des Bodens des Vorlagebehälters ersetzt, wodurch gewährleistet würde, dass auch das Material, das sich entfernt von dem Schlitz 26 in dem Vorlagebehälter 24 befindet, von dem Band 28 durch den Schlitz 26 hindurchbefördert wird.

Sowohl bei der Ausführungsform gemäß der Figur 3b als auch bei der Ausführungsform gemäß der Figur 3c kann ein Sensor oder eine Sensorreihe (nicht dargestellt) eingesetzt werden, der die tatsächliche Füllhöhe in dem Dosierschacht erfasst. Das zu der Füllhöhe korrespondierende Ausgangssignal des Sensors kann dann an eine Steuerungseinheit (nicht dargestellt) weitergegeben werden, von der diejenige Geschwindigkeit der Walze 27 bzw. des Bandes 28 eingesteuert wird, die für eine Aufrechterhaltung einer konstanten Füllhöhe in dem Dosierschacht 30 erforderlich ist.

In Figur 3d ist noch eine weitere Ausführungsform dargestellt. Hierbei kann mittels eines Schiebers 29 die Höhe und damit die Weite des Schlitzes 26 eingestellt werden, um die Durchflussmenge des Materials, das von dem Vorlagebehälter in den Dosierschacht fließt, zu regeln. Damit kann bei einer Verwendung des Prinzips der Ausführungsform aus Figur 3a die Durchflussmenge durch den Schlitz beispielsweise an unterschiedliche Materialien oder auch an unterschiedliche Schichtdicken der auf der Fläche 50 aufgetragenen Schichten angepasst werden. Andererseits kann vorgesehen sein, die Durchflussmenge durch den Schlitz 26 aktiv während der Auftragung einer Schicht zu regeln, um die Füllhöhe in dem Dosierschacht konstant zu halten. Auch hierbei kann ein entsprechender Sensor vorgesehen werden, der die Füllhöhe erfasst und an eine Steuerungseinheit weitergibt.

Außerdem kann es vorteilhaft sein, die schräg zum Schlitz 26 hin abfallende Bodenwand 25 des Vorlagebehälters in ihrem Steigungswinkel verstellbar auszuführen, um die Auftragevorrichtung zum Beispiel an unterschiedliche fließfähige Materialen und Materialmengen anpassen zu können.

## Patentansprüche

1. Verfahren zum flächigen Auftragen von fließfähigem Partikelmaterial in einzelnen übereinander liegenden Schichten auf eine Unterlage, um ein dreidimensionales Objekt durch selektives Verfestigen der aufeinander folgenden Schichten herzustellen, bei welchem Verfahren aus einem Materialvorrat, der in einen Vorlagebehälter (24) eingefüllt ist, das fließfähige Partikelmaterial in einen langgestreckten, im Querschnitt trichterförmigen Dosierschacht (30) über dessen gesamte Länge hin eingefüllt wird, der Dosierschacht (30) über die Unterlage hinweg hin und her bewegt wird und das eingefüllte Partikelmaterial während der Bewegung aus einem Schlitz an der Unterseite des Dosierschachts (30) in einer kontinuierlichen Schicht nach unten ausgetragen und gleichmäßig verteilt wird, **dadurch gekennzeichnet** daβ der Materialvorrat aus fließfähigem Partikelmaterial in dem Vorlagebehälter (24) gleichmäßig vorverteilt wird, der Vorlagebehälter (24) zusammen mit dem Dosierschacht (30) über die Unterlage hinweg bewegt wird und der Dosierschacht (30) aus dem Materialvorrat während der Bewegung derart mit fließfähigem Partikelmaterial befüllt wird, dass die Füllhöhe in dem Dosierschacht (30) konstant bleibt.

2. Auftragevorrichtung (20) zum flächigen Auftragen von fließfähigem Partikelmaterial in einzelnen übereinander liegenden Schichten auf eine Unterlage, welche Auftragevorrichtung über die Unterlage hinweg hin und her bewegbar ist und einen langgestreckten Dosierschacht (30) mit untenliegender schlitzförmiger Austragsöffnung, aus welcher das fließfähige Partikelmaterial während der Bewegung der Auftragevorrichtung (30) als kontinuierliche Schicht austragbar ist, und oberhalb des Dosierschachts (30) einen nach oben offenen Vorlagebehälter (24) aufweist, **dadurch gekennzeichnet, dass** der Vorlagebehälter eine Verteilvorrichtung (22) zum gleichmäßigen Vorverteilen des in den Vorlagebehälter eingefüllten Partikelmaterials innerhalb des Vorlagebehälters aufweist aus welchem das eingefüllte Material derart dosiert in den Dosierschacht (30) zuführbar ist, dass im Dosierschacht (30) während des Austrags des Partikelmaterials eine vorbestimmte konstante Füllhöhe erhalten bleibt.

## Claims

1. A method of applying flowable particulate material on a surface of a substrate in individual superimposed layers to produce a three-dimensional object by selective solidification of the successive layers, in which method the flowable particulate material is introduced, from a material supply which has been introduced into a charging container (24), into an elongate, cross-sectionally hopper-shaped metering shaft (30) over the entire length thereof, the metering shaft (30) is moved back and forth over the substrate and, during the movement, the particulate material introduced is discharged downward in a continuous layer from a slot on the underside of the metering shaft (30) and distributed uniformly, **characterized in that** the material supply of flowable particulate material is uniformly distributed on a preliminary basis in the charging container (24), the charging container (24) is moved over the substrate together with the metering shaft (30) and, during the movement, the metering shaft (30) is filled with flowable particulate material from the material supply such that the filling height in the metering shaft (30) remains constant.

2. An application apparatus (20) for applying flowable particulate material on a surface of a substrate in individual superimposed layers, which application apparatus being movable back and forth over the substrate and comprising an elongate metering shaft (30) with a slot-shaped discharge opening arranged at the bottom, from which the flowable particulate material can be discharged as a continuous layer during the movement of the application apparatus (30), and comprising, above the metering shaft (30), a charging container (24) which is open in the upward direction, **characterized in that** the charging container has a distribution device (22) for a uniform pre-distribution within the charging container of the particulate material which has been introduced into the charging container, from which charging container (24) the material introduced can be fed in metered form into the metering shaft (30) such that a predetermined constant filling height is maintained in the metering shaft (30) during discharge of the particulate material.

## Revendications

1. Procédé pour déposer à plat une matière particulaire apte à couler en couches individuelles superposées sur un support pour fabriquer un objet tridimensionnel par solidification sélective des couches successives, dans lequel, à partir d'une réserve de matière qui est versée dans un récipient de préparation (24), la matière particulaire apte à couler est déversée dans un puits de dosage allongé (30) en forme d'entonnoir en section transversale sur toute sa longueur, le puits de dosage (30) est déplacé en va-et-vient au-dessus du support et la matière particulaire déversée est déchargée vers le bas pendant le mouvement par une fente située sur le bas du puits de dosage (30) en une couche continue et elle est distribuée de manière homogène, **caractérisé en ce que** la réserve de matière particulaire apte à couler est préalablement distribuée de manière homogène dans le récipient de préparation (24), **en ce que** le récipient de préparation (24) est déplacé conjointement avec le puits de dosage (30) au dessus du support, **en ce que** le puits de dosage (30) est rempli, pendant le mouvement, de matière particulaire apte à couler à partir de la réserve de matière de manière à ce que la hauteur de remplissage reste constante dans le puits de dosage (30).

2. Dispositif d'application (20) pour déposer à plat une matière particulaire apte à couler en couches individuelles superposées sur un support, lequel dispositif d'application peut être déplacé en va-et-vient au-dessus du support et présente un puits de dosage allongé (30) avec une ouverture de décharge en forme de fente, située en dessous, par laquelle la matière particulaire apte à couler peut être déchargée pendant le mouvement du dispositif d'application(20) sous la forme d'une couche continue, et un récipient de préparation (24) ouvert vers le haut au-dessus du puits de dosage (30), **caractérisé en ce que** le récipient de préparation présente un dispositif de distribution (22) pour distribuer préalablement de manière homogène la matière particulaire versée dans le récipient de préparation à l'intérieur du récipient de préparation, à partir duquel la matière versée peut être acheminée dans le puits de dosage (30) après avoir été dosée, de manière à conserver une hauteur de remplissage constante prédéterminée dans le puits de dosage (30) pendant la décharge de la matière particulaire.
